(19) Europäisches Patentamt
European Patent Office
Office européen des brevets

(11) EP 4 773 294 A1

(12) **EUROPEAN PATENT APPLICATION**
published in accordance with Art. 153(4) EPC

(43) Date of publication:
**08.07.2026 Bulletin 2026/28**

(21) Application number: **24860159.3**

(22) Date of filing: **09.07.2024**

(51) International Patent Classification (IPC):
***H01M 10/0567*** *(2010.01)* ***H01M 10/052*** *(2010.01)*
***H01M 4/505*** *(2010.01)* ***H01M 4/525*** *(2010.01)*
***H01M 4/02*** *(2006.01)*

(52) Cooperative Patent Classification (CPC):
**H01M 4/02; H01M 4/505; H01M 4/525; H01M 10/052; H01M 10/0567;** Y02E 60/10

(86) International application number:
**PCT/KR2024/009761**

(87) International publication number:
**WO 2025/048236 (06.03.2025 Gazette 2025/10)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.08.2023 KR 20230115281**

(71) Applicant: **SK On Co., Ltd.**
**Seoul 03161 (KR)**

(72) Inventors:
- **KIM, Seung Hyun**
  **Daejeon 34124 (KR)**
- **CHO, In Haeng**
  **Daejeon 34124 (KR)**
- **PARK, Ki Sung**
  **Daejeon 34124 (KR)**
- **PARK, Young Uk**
  **Daejeon 34124 (KR)**
- **SHIM, Yu Na**
  **Daejeon 34124 (KR)**
- **LEE, Min Young**
  **Daejeon 34124 (KR)**
- **CHO, Yong Hyun**
  **Daejeon 34124 (KR)**

(74) Representative: **Prüfer & Partner mbB**
**Patentanwälte · Rechtsanwälte**
**Sohnckestraße 12**
**81479 München (DE)**

# (54) ELECTROLYTE FOR RECHARGEABLE LITHIUM BATTERY AND RECHARGEABLE LITHIUM BATTERY INCLUDING SAME

(57) An electrolyte for a rechargeable lithium battery, according to embodiments of the present disclosure, comprises: a lithium salt; an organic solvent; and a fluorine-based additive of a specific chemical formula. The rechargeable lithium battery comprises: an electrode assembly which comprises a positive electrode comprising a lithium-transition metal oxide having a lithium molar ratio of 1.1 or more, and a negative electrode facing the positive electrode; and an electrolyte which is impregnated in the electrode assembly and comprises a fluorine-based additive of a specific chemical formula. Through the fluorine-based additive, electrolyte side reactions can be prevented, and the high-voltage charging stability and high-temperature lifespan characteristics of a positive electrode active material can be improved.

FIG. 1

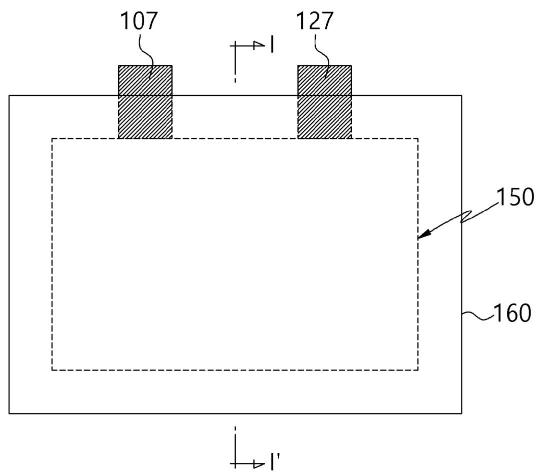


EP 4 773 294 A1

## Description

[Technical Field]

The present disclosure relates to an electrolyte for a rechargeable lithium battery (hereinafter, referred to as a lithium secondary battery) and a lithium secondary battery including the same. More specifically, the present disclosure relates to an electrolyte for a lithium secondary battery including an additive and a lithium secondary battery including the electrolyte.

[Background Art]

Secondary batteries are batteries that can be repeatedly charged and discharged. With the development of information and communication and display industries, they have been widely applied as power sources for portable electronic communication devices, such as camcorders, mobile phones, and laptop PCs. In addition, battery packs including secondary batteries have recently been developed and applied as power sources for eco-friendly vehicles, such as hybrid vehicles.

Examples of secondary batteries may include a lithium secondary battery, a nickelcadmium battery, and a nickel-hydrogen battery. Among these, the lithium secondary battery has been actively developed and applied due to its high operating voltage, high energy density per unit weight, and advantages in charging speed and weight reduction.

The lithium secondary battery may include: an electrode assembly including a cathode, an anode, and a separation membrane (separator); and an electrolyte that impregnates the electrode assembly. The lithium secondary battery may further include, for example, a pouch-type outer case that accommodates the electrode assembly and the electrolyte.

A cathode active material of the lithium secondary battery may include a lithium-rich cathode active material in which lithium is present also in a transition metal layer of a layered structure. The lithium-rich cathode active material exhibits high capacity properties; however, high-voltage operation is required, which may degrade the cycle life properties of the lithium secondary battery.

DETAILED DESCRIPTIONS OF THE INVENTION

[Technical Objective]

An object of the present disclosure is to provide an electrolyte for a lithium secondary battery with improved electrochemical stability.

Another object of the present disclosure is to provide a lithium secondary battery with improved capacity properties and operating stability.

[Means for Resolving the Objective]

An electrolyte for a lithium secondary battery according to exemplary embodiments of the present disclosure may include a lithium salt, an organic solvent, and a fluorinated additive. The fluorinated additive may be represented by Chemical Formula 1 below.

[Chemical Formula 1]

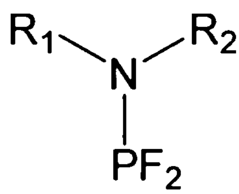

In Chemical Formula 1, $R_1$ and $R_2$ may each be independently hydrogen, a hydroxyl group, an aliphatic hydrocarbon group having 1 to 10 carbon atoms, or an aromatic hydrocarbon group having 6 to 10 carbon atoms.

In some embodiments, in Chemical Formula 1, $R_1$ and $R_2$ may each be independently an alkyl group having 1 to 3 carbon atoms.

In some embodiments, the content of the fluorinated additive may be 0.1% by weight to 5.0% by weight based on

the total weight of the electrolyte for a lithium secondary battery.

In some embodiments, the electrolyte for a lithium secondary battery may further include at least one auxiliary additive selected from the group consisting of a cyclic carbonate compound, a fluorine-substituted cyclic carbonate compound, a sultone compound, and a cyclic sulfonate compound.

In some embodiments, the content of the auxiliary additive may be 0.01% by weight to 5.0% by weight based on the total weight of the electrolyte for a lithium secondary battery.

In some embodiments, the organic solvent may include a cyclic carbonate compound and a linear carbonate compound.

In some embodiments, the organic solvent may include at least one of ethylene carbonate (EC), ethyl methyl carbonate (EMC), dimethyl carbonate (DMC), and diethyl carbonate (DEC).

A lithium secondary battery according to exemplary embodiments of the present disclosure may include an electrode assembly that includes a cathode including a lithium metal oxide having a molar ratio of lithium of 1.1 or more, and an anode disposed opposite the cathode; and an electrolyte that impregnates the electrode assembly and includes a fluorinated additive represented by Chemical Formula 1 below.

In some embodiments, the electrolyte may further include a lithium salt and an organic solvent.

In some embodiments, the content of the fluorinated additive may be 0.1% by weight to 5.0% by weight based on the total weight of the electrolyte.

In some embodiments, the molar ratio of lithium in the lithium metal oxide may be greater than 1.1.

In some embodiments, the lithium metal oxide may further include nickel and manganese.

In some embodiments, the molar ratio of manganese in the lithium metal oxide may be greater than the molar ratio of nickel.

In some embodiments, the lithium metal oxide may be represented by Chemical Formula 2:

[Chemical Formula 2] $Li_a[M_xNi_yMn_z]O_b$

In Chemical Formula 2, M may be at least one selected from the group consisting of Co, Mg, V, Ti, Al, Ru, Zr, W, Sn, Nb, Mo, Cu, Zn, Cr, Ga, V and Bi, and $0 \le x \le 0.9$, $0 \le y \le 0.9$, $0.1 \le z \le 0.9$, $x+y>0$, $1.8 \le a+x+y+z \le 2.2$, $1.05 \le a/(x+y+z) \le 1.95$, and $1.8 \le b \le 2.2$.

In some embodiments, in Chemical Formula 2, $y \le z$.

[Effects of the Invention]

The cathode according to embodiments of the present disclosure includes a cathode active material that includes lithium metal oxide particles including an excess of lithium. In this case, lithium may be present in the transition metal layer of the layered structure of the lithium metal oxide particles. Accordingly, the capacity properties of the cathode active material may be improved.

According to exemplary embodiments, the lithium secondary battery includes a non-aqueous electrolyte. The non-aqueous organic solvent of the non-aqueous electrolyte includes a fluorinated organic solvent within a predetermined content range. Accordingly, oxidation resistance of the non-aqueous electrolyte may be enhanced, thereby improving the cycle life properties of the lithium secondary battery and reducing a resistance increase ratio due to repeated charge/-discharge cycles.

[Brief Description of Drawings]

FIGS. 1 and 2 are a schematic plan view and a schematic cross-sectional view, respectively, illustrating a lithium secondary battery according to exemplary embodiments.

[Implementation for Practicing the Invention]

Embodiments of the present disclosure provide a lithium secondary battery including a cathode, an anode, and an electrolyte.

The lithium secondary battery according to embodiments of the present disclosure may be widely applied in green technology fields, such as electric vehicles, battery charging stations, as well as solar power generation, wind power generation, and the like, which use batteries. In addition, the lithium secondary battery according to embodiments of the present disclosure may be used in eco-friendly electric vehicles, hybrid vehicles, and the like, which are aimed at mitigating climate change by reducing air pollution and greenhouse gas emissions.

Hereinafter, embodiments of the present disclosure will be described in detail. However, the embodiments are merely illustrative, and the present disclosure is not limited to the specific embodiments described as examples.

The lithium secondary battery according to the exemplary embodiments may include an electrode assembly that includes a cathode and an anode. The electrode assembly may further include a separator interposed between the cathode and the anode. The electrode assembly may be accommodated in a case together with an electrolyte solution including an electrolyte and may be impregnated with the electrolyte.

The cathode may include a cathode active material layer formed by applying a cathode active material to a cathode current collector. The cathode active material may include a compound capable of reversibly intercalating and deintercalating lithium ions.

The cathode active material may include a lithium metal oxide. For example, the lithium metal oxide may include nickel (Ni), and may further include at least one of manganese (Mn) and cobalt (Co).

According to exemplary embodiments, the lithium metal oxide may include a lithium-rich oxide having a molar ratio of lithium greater than 1. For example, when a total molar amount of metals included in the lithium metal oxide is 2, a molar amount of lithium included in the lithium metal oxide particles may be greater than 1.

For example, lithium may be present at some of transition metal sites of the lithium metal oxide. Accordingly, the capacity properties of the cathode active material may be improved to be close to the theoretical capacity (250 mAh/g) of a layered structure.

In some embodiments, the molar ratio of lithium in the lithium metal oxide may be 1.05 or more, 1.1 or more, or greater than 1.1. In one embodiment, the molar ratio of lithium in the lithium metal oxide may be 1.15 or more or 1.2 or more, and may be 1.95 or less, 1.8 or less, or 1.6 or less. Within this range, lithium may be sufficiently present in a transition metal layer as well as in a lithium layer in the layered structure of the lithium metal oxide particles.

In some embodiments, the lithium metal oxide may include a lithium-nickel-manganese-based oxide including nickel and manganese.

In one embodiment, the molar ratio of manganese in the lithium metal oxide may be greater than that of nickel. For example, a mole fraction of manganese in the lithium metal oxide may be 0.5 or more, for example, 0.5 to 0.75. As the lithium metal oxide includes manganese in a high content, high conductivity and high capacity may be achieved.

In some embodiments, the lithium metal oxide may include a chemical structure or a crystal structure represented by Chemical Formula 2 below. For example, the lithium metal oxide may include a layered structure represented by Chemical Formula 2 below.

[Chemical Formula 2] $Li_a[M_xNi_yMn_z]O_b$

Chemical Formula 2 may represent an average composition of the lithium metal oxide. In Chemical Formula 2, M may be at least one of Co, Mg, V, Ti, Al, Ru, Zr, W, Sn, Nb, Mo, Cu, Zn, Cr, Ga, V and Bi.

In Chemical Formula 2, x, y, z and b may satisfy $0 \leq x \leq 0.9$, $0 \leq y \leq 0.9$, $0.1 \leq z \leq 0.9$, $x+y>0$, $1.8 \leq a+x+y+z \leq 2.2$, $1.05 \leq a/(x+y+z) \leq 1.95$, and $1.8 \leq b \leq 2.2$.

In some embodiments, in Chemical Formula 2, y may satisfy $y \leq z$ or $y<z$. In one embodiment, z may satisfy $0.5 \leq z \leq 0.9$, or $0.5 \leq z \leq 0.75$.

In one embodiment, a, x, y and z may satisfy $1.05 \leq a/(x+y+z) \leq 1.8$, $1.1 \leq a/(x+y+z) \leq 1.95$, $1.1<a/(x+y+z) \leq 1.95$, or $1.1<a/(x+y+z) \leq 1.6$.

The chemical structure represented by Chemical Formula 2 indicates a bonding relationship among elements included in the layered structure or the crystal structure of the lithium metal oxide particles, and does not exclude the presence of additional elements. For example, Ni, Mn, and M in Chemical Formula 2 may be provided as main active elements of the cathode active material. Here, it should be understood that Chemical Formula 2 is provided to express the bonding relationship between the main active elements, and is a formula encompassing the introduction and substitution of additional elements.

In one embodiment, auxiliary elements may be further included in addition to the main active elements to enhance chemical stability of the lithium metal oxide particles or the layered structure/crystal structure. The auxiliary elements may be incorporated into the layered structure/crystal structure together with the main active elements to form bonds, and it should be understood that this case is also included within the chemical structure range represented by Chemical Formula 2.

The auxiliary elements may include, for example, at least one selected from the group consisting of Na, Mg, Ca, Y, Ti, Hf, V, Nb, Ta, Cr, Mo, W, Fe, Cu, Ag, Zn, B, Al, Ga, C, Si, Sn, Sr, Ba, Ra and P.

In one embodiment, the lithium-rich oxide may be a solid-solution phase in which a $Li_2MnO_3$ structure and $LiMO_2$ coexist. Accordingly, lithium ions within the lithium metal oxide particles may also be present in a transition metal layer of the $Li_2MnO_3$ phase, thereby improving the capacity properties of the cathode active material.

As described above, by employing a lithium-rich oxide having a relatively high lithium content as the cathode active material, some of transition metal sites may be substituted with lithium. The lithium-rich oxide may undergo rearrangement of a crystal structure when charged in a relatively high voltage range (e.g., 4.4 V or higher, or 4.5 V or higher). Accordingly, charging in the high voltage range is possible, and a high reversible capacity may be provided.

However, the lithium-rich oxide may reduce the electrode density due to the high lithium content, thereby decreasing the capacity efficiency relative to the electrode volume. In addition, lithium impurities (e.g., LiOH, $Li_2CO_3$) may more easily form on the surface of the cathode active material. The lithium impurities may cause side reaction of the electrolyte, resulting in gas generation and battery expansion during repeated charge/discharge cycles.

Furthermore, exposure to harsh environments, such as high or low temperatures, may cause instability in the crystal structure of the transition metal, resulting in reduced discharge capacity and a voltage drop.

According to exemplary embodiments of the present invention, the above-described lithium-rich oxide and electrolyte additive may be combined to reduce or suppress the electrical and chemical instability described above.

The electrolyte for a lithium secondary battery according to exemplary embodiments may include a lithium salt, an organic solvent, and a fluorinated additive.

According to exemplary embodiments, the fluorinated additive may include a compound represented by Chemical Formula 1 below.

[Chemical Formula 1]

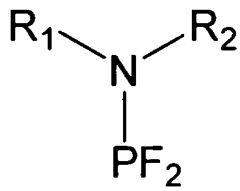

In Chemical Formula 1, $R_1$ and $R_2$ may each independently be hydrogen, a hydroxyl group, an aliphatic hydrocarbon group having 1 to 10 carbon atoms, or an aromatic hydrocarbon group having 6 to 10 carbon atoms.

The term "aliphatic hydrocarbon group," as used herein, is intended to encompass organic groups that do not include an aromatic ring throughout the compound. For example, the aliphatic hydrocarbon group may include a substituted or unsubstituted alkyl group, a substituted or unsubstituted alkenyl group, or a substituted or unsubstituted alkynyl group.

The term "aromatic hydrocarbon group," as used herein, is intended to encompass compounds that are aromatic throughout the compound or compounds in which a portion of a molecular structure has aromaticity, such as a benzene ring. For example, the aromatic hydrocarbon group may include a substituted or unsubstituted aryl group, a substituted or unsubstituted arylalkyl group, or a substituted or unsubstituted alkylaryl group.

The term "substituted," as used herein, may mean that at least one hydrogen atom of a compound is replaced with a substituent such as a halogen group, a hydroxyl group, a heteroalkyl group, a heterocycloalkyl group, a heteroaryl group, an amine group, a nitrile group, a nitro group, or a silyl group.

The fluorinated additive may contact the cathode active material to form a coordination bond. For example, when a difluorophosphine group ($-PF_2$) is exposed at a terminal of the fluorinated additive, the difluorophosphine group may be more likely to freely contact the cathode active material to form a coordination bond.

Consequently, a cathode electrolyte interphase (CEI) layer may be formed at the interface between the cathode active material and the electrolyte, thereby protecting the surface of the cathode active material or the cathode surface. In addition, an interaction between the difluorophosphine group of the fluorinated additive and the transition metal may reduce or suppress the crystal structure or chemical structural instability at the surface of the above-described lithium-rich oxide particles.

In some embodiments, oxidation resistance of the electrolyte may be enhanced due to the fluorine ions derived from the fluorinated additive. Accordingly, cycle life properties of the lithium secondary battery may be improved, and a resistance increase ratio due to repeated charge/discharge cycles may be reduced.

In addition, the fluorinated additive may include an amine group ($-NR_1R_2$) bonded to a difluorophosphine group, and thus may have a relatively high boiling point and chemical stability. Accordingly, the fluorinated additive may stably form a protective film at high temperatures, and high-temperature and high-voltage operating stability of the secondary battery may be improved.

In some embodiments, in Chemical Formula 1, $R_1$ and $R_2$ may each be aliphatic hydrocarbon groups having 1 to 10 carbon atoms, or alkyl groups having 1 to 3 carbon atoms. In this case, due to an alkyl group structure, a film having high thermal stability may be formed on an electrode surface. Accordingly, ionic conductivity of the non-aqueous electrolyte and electrode protection properties may be improved.

When the fluorinated additive includes an alkyl group having a short chain structure, heat resistance and flame retardancy may be secured while suppressing an increase in resistance. Accordingly, passivation of the cathode active material, surface stabilization effects, and ionic conductivity may be enhanced, thereby improving high-temperature

stability and cycle life stability of the lithium secondary battery, and further improving capacity properties.

As described above, during repeated charge/discharge cycles, gas generation due to side reactions caused by elution of transition metal ions from the cathode active material may be suppressed by a protective film formed by the fluorinated additive. Therefore, even when a lithium-rich oxide is used, crystal structure instability of a transition metal may be reduced or suppressed, thereby preventing a decrease in discharge capacity and a voltage drop. Accordingly, stable capacity retention of the secondary battery may be ensured even under high-temperature and high-voltage conditions.

In some embodiments, the content of the fluorinated additive based on the total weight of the electrolyte may be less than about 10% by weight ("wt%"), and may be 0.1 wt% or more.

For example, in consideration of achieving sufficient passivation and stabilization, the content of the fluorinated additive may be adjusted to 0.1 wt% or more, 0.2 wt% or more, 0.3 wt% or more, 0.4 wt% or more, 0.5 wt% or more, or 1 wt% or more. In addition, in consideration of lithium-ion migration and active material activity in the electrolyte, the content of the fluorinated additive may be adjusted to 9 wt% or less, 7 wt% or less, 6 wt% or less, 5 wt% or less, 4.5 wt% or less, 4 wt% or less, 3.5 wt% or less, 3 wt% or less, or 2 wt% or less.

In one embodiment, the content of the fluorinated additive may be 0.1 wt% to 5 wt%, and more preferably 0.5 wt% to 2 wt%. Within this range, the passivation and surface stabilization effects of the above-described cathode active material may be sufficiently achieved without excessively inhibiting lithium ion migration and the activity of the cathode active material.

In some embodiments, the electrolyte may further include an auxiliary additive. For example, the auxiliary additive may include a cyclic carbonate compound containing a double bond, a fluorine-substituted cyclic carbonate compound, a sultone compound, or a cyclic sulfonate compound.

The cyclic carbonate compound containing a double bond may include vinylene carbonate (VC), vinyl ethylene carbonate (VEC), etc.

The fluorine-substituted cyclic carbonate compound may include fluoroethylene carbonate (FEC).

The sultone compound may include 1,3-propane sultone, 1,3-propene sultone, 1,4-butane sultone, etc.

The cyclic sulfonate compound may include 1,2-ethylene sulfate, 1,2-propylene sulfate, etc.

In one embodiment, a fluorine-substituted cyclic carbonate compound and a cyclic carbonate compound may be used together as the auxiliary additive. In this case, the stability and durability of the protective film may be further enhanced. In one embodiment, a sultone compound may be used together with the fluorine-substituted cyclic carbonate compound and the cyclic carbonate compound.

The above-described auxiliary additive may further enhance the durability and stability of the protective film formed by the fluorinated additive. The auxiliary additive may be included in an appropriate amount within a range that does not inhibit the passivation action of the fluorinated additive and the migration of lithium ions within the electrolyte.

In some embodiments, the content of the auxiliary additive may be 0.01 wt% to 5 wt%, preferably 0.05 wt% to 5 wt%, and more preferably 0.1 wt% to 4 wt%, based on the total weight of the non-aqueous electrolyte. Within this range, the durability of the protective film may be improved without inhibiting the film formation of the fluorinated additive.

The lithium salt may be expressed as, for example, $Li^+X^-$, and non-limiting examples of the anion (X-) of the lithium salt may include $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$. These may be used alone or in combination of two or more lithium salts.

In one embodiment, the lithium salt may include $LiBF_4$ and/or $LiPF_6$.

In one embodiment, the lithium salt may be included in the organic solvent at a concentration of 0.01 to 5 M, preferably 0.01 to 2 M, and more preferably 0.1 to 1.5 M. Within this range, the transfer of lithium ions and/or electrons during charge and discharge of the lithium secondary battery may be promoted, thereby improving the capacity properties.

The organic solvent may include an organic compound that provides sufficient solubility for the lithium salt and the fluorinated additive, and is electrochemically stable without reacting in the lithium secondary battery. In some embodiments, a non-aqueous organic solvent is used, and the electrolyte may be provided as a non-aqueous electrolyte.

In exemplary embodiments, the organic solvent may include a carbonate-based solvent, an ester-based solvent, an ether-based solvent, a ketone-based solvent, an alcohol-based solvent, or an aprotic solvent. These may be used alone or in combination of two or more thereof.

Examples of the carbonate-based solvent may include a linear carbonate compound such as dimethyl carbonate (DMC), ethyl methyl carbonate (EMC), methyl propyl carbonate, ethyl propyl carbonate, diethyl carbonate (DEC), dipropyl carbonate, etc., or a cyclic carbonate compound such as propylene carbonate (PC), ethylene carbonate (EC), fluoroethylene carbonate (FEC), butylene carbonate, etc.

Examples of the ester-based solvent may include methyl acetate (MA), ethyl acetate (EA), n-propyl acetate (n-PA), 1,1-dimethylethyl acetate (DMEA), methyl propionate (MP), ethyl propionate (EP), γ-butyrolactone (GBL), decanolide, valerolactone, mevalonolactone, caprolactone, etc.

Examples of the ether-based organic solvent may include dibutyl ether, tetraethylene glycol dimethyl ether

(TEGDME), diethylene glycol dimethyl ether (DEGDME), dimethoxyethane, 2-methyltetrahydrofuran, tetrahydrofuran, etc.

Examples of the ketone-based solvent may include cyclohexanone. Examples of the alcohol-based solvent may include ethyl alcohol, isopropyl alcohol, etc.

The aprotic solvent may include a nitrile-based solvent, an amide-based solvent such as dimethylformamide (DMF), a dioxolane-based solvent such as 1,3-dioxolane, or a sulfolane-based solvent.

In some embodiments, a carbonate-based solvent may be used as the organic solvent. For example, the organic solvent may include ethylene carbonate (EC), ethyl methyl carbonate (EMC), dimethyl carbonate (DMC), diethyl carbonate (DEC), or a combination thereof.

In one embodiment, a combination of at least two of ethylene carbonate (EC), ethyl methyl carbonate (EMC), dimethyl carbonate (DMC), and diethyl carbonate (DEC) may be used as the organic solvent. For example, the organic solvent may include a combination of a cyclic carbonate compound and a linear carbonate compound.

The organic solvent in the electrolyte may be used as the balance or the remainder excluding the above-described components.

Hereinafter, a lithium secondary battery including the cathode and electrolyte described above will be described with reference to FIGS. 1 and 2.

Referring to FIGS. 1 and 2, the lithium secondary battery may include a cathode 100 that includes a cathode active material including the above-described lithium metal oxide particles, and an anode 130 disposed opposite the cathode 100.

The cathode 100 may include a cathode active material layer 110 formed by applying the cathode active material including the above-described lithium metal oxide particles to a cathode current collector 105.

For example, a cathode slurry may be prepared by mixing the cathode active material with a binder, a conductive material, and/or a dispersant in a solvent, followed by stirring. The prepared cathode slurry may be coated onto at least one surface of the cathode current collector 105, and then dried and roll-pressed to fabricate the cathode 100.

The cathode current collector 105 may include stainless steel, nickel, aluminum, titanium, or an alloy thereof. The cathode current collector 105 may also include aluminum or stainless steel having a surface treated with at least one of carbon, nickel, titanium, or silver.

The binder may include, for example, an organic binder such as vinylidene fluoride-hexafluoropropylene copolymer (PVDF-co-HFP), polyvinylidene fluoride (PVDF), polyacrylonitrile, polymethyl methacrylate, etc., or an aqueous binder such as styrene-butadiene rubber (SBR), and may be used together with a thickener such as carboxymethyl cellulose (CMC).

For example, a PVDF-based binder may be used as a binder for forming the cathode. In this case, the amount of the binder for forming the cathode active material layer 110 may be reduced and the amount of the cathode active material may be relatively increased. Thereby, the output and capacity of the secondary battery may be improved.

The conductive material may be included to facilitate electron migration between the active material particles. For example, the conductive material may include carbon-based conductive materials such as graphite, carbon black, graphene, or carbon nanotubes; and/or metal-based conductive materials such as tin, tin oxide, and titanium oxide; as well as perovskite materials such as $LaSrCoO_3$, and $LaSrMnO_3$, etc.

The anode 130 may include an anode current collector 125 and an anode active material layer 120 formed by coating an anode active material onto at least one surface of the anode current collector 125.

As the anode active material, any active material known in the art may be used, so long as it is capable of absorbing and releasing lithium ions, without particular limitation. For example, carbon-based materials such as crystalline carbon, amorphous carbon, carbon composites, carbon fibers, etc.; a lithium alloy; silicon or tin may be used.

The amorphous carbon may include, for example, hard carbon, coke, mesocarbon microbead (MCMB) calcined at 1500°C or lower, mesophase pitch-based carbon fiber (MPCF) or the like. The crystalline carbon may include, for example, graphite-based carbon such as natural graphite, graphitized coke, graphitized MCMB, graphitized MPCF or the like. Other elements contained in the lithium alloy may include, for example, aluminum, zinc, bismuth, cadmium, antimony, silicon, lead, tin, gallium, indium or the like.

The anode current collector 125 may include, for example, gold, stainless steel, nickel, aluminum, titanium, copper, or an alloy thereof, and preferably includes copper or a copper alloy.

In some embodiments, a slurry may be prepared by mixing the anode active material with a binder, a conductive material and/or a dispersant in a solvent, followed by stirring. The slurry may be coated on the anode current collector, and then dried and roll-pressed to fabricate the anode 130.

As the binder and the conductive material, materials which are substantially the same as or similar to the above-described materials may be used. In some embodiments, a binder for forming the anode may include, for example, an aqueous binder such as styrene-butadiene rubber (SBR) to ensure compatibility with the carbon-based active material, and may be used together with a thickener such as carboxymethyl cellulose (CMC).

In some embodiments, a separator 140 may be interposed between the cathode 100 and the anode 130. The

separator 140 may include a porous polymer film made of a polyolefin polymer such as ethylene homopolymer, propylene homopolymer, ethylene/butene copolymer, ethylene/hexene copolymer, or ethylene/methacrylate copolymer. The separator 140 may include a nonwoven fabric made of glass fibers having a high melting point, polyethylene terephthalate fibers, etc.

According to exemplary embodiments, an electrode cell may be defined by the cathode 100, the anode 130, and the separator 140, and a plurality of such electrode cells may be repeatedly disposed to form an electrode assembly 150. In some embodiments, the electrode assembly 150 may be a winding type, a stacking type, a z-folding type, or a stacked-folding type.

The electrode assembly 150 may be accommodated in a case 160 together with the above-described electrolyte to define the lithium secondary battery. For example, the above-described electrolyte may impregnate the electrode assembly 150.

As illustrated in FIG. 1, electrode tabs (cathode tabs and anode tabs) may be formed from the cathode current collector 105 and the anode current collector 125, each belonging to a respective electrode cell, and may extend to one side of the case 160. The electrode tabs may be welded together with the one side of the case 160 to form electrode leads (a cathode lead 107 and an anode lead 127) that extend from or are exposed to the outside of the case 160.

The lithium secondary battery may be manufactured, for example, in a cylindrical, prismatic, pouch, or coin type using a can.

Hereinafter, embodiments of the present invention will be further described with reference to specific experimental examples. However, the examples and comparative examples included in the experimental examples are provided merely for illustrative purposes of the present invention and those skilled in the art will obviously understand that various changes and modifications can be made within the scope and spirit of the present invention. Such changes and modifications are to be regarded as falling within the scope of the appended claims.

## Examples and Comparative Examples

### Example 1

#### (1) Preparation of Electrolyte

A 1.05 M $LiPF_6$ solution (a mixed solvent of EC/EMC in a volume ratio of 25:75) was prepared. Based on the total weight of the electrolyte, 2 wt% of fluoroethylene carbonate (FEC), 1 wt% of $LiPO_2F_2$(W3), 1.0 wt% of 1,3-propane sultone (PS), and 0.3 wt% of 1,3-propene sultone (PRS) were added to the $LiPF_6$ solution, and 1 wt% of the compound of Chemical Formula 1-1 below was further added as a fluorinated additive.

[Chemical Formula 1-1]

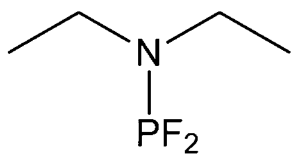

#### (2) Manufacture of Lithium Secondary Battery Sample

A slurry was prepared by mixing $Li_{1.15}Ni_{0.30}Mn_{0.55}O_2$ as a cathode active material, carbon black as a conductive material, and polyvinylidene fluoride (PVdF) as a binder in a weight ratio of 92:5:3. The slurry was uniformly applied to an aluminum foil having a thickness of 15 μm, followed by vacuum drying and roll-pressing at 130 °C to fabricate a cathode for a lithium secondary battery.

An anode slurry was prepared by mixing 95 wt% of an anode active material, in which artificial graphite and natural graphite were mixed in a weight ratio of 7:3, 1 wt% Super-P as a conductive material, 2 wt% styrene-butadiene rubber (SBR) as a binder, and 2 wt% carboxymethyl cellulose (CMC) as a thickener. The anode slurry was uniformly coated on a copper foil having a thickness of 15 μm, and then dried and roll-pressed to fabricate an anode.

The cathode and anode fabricated as described above were each cut to a predetermined size and stacked. A separator (polyethylene, thickness: 20 μm) was interposed between the cathode and anode to form an electrode assembly. The tab portions of the cathode and the tab portions of the anode were then welded, respectively.

The electrode assembly was placed in a pouch, and three sides of the pouch were sealed, leaving one side open for electrolyte injection. At this time, the portion having the electrode tab was included in the sealed portion. After injecting

the electrolyte prepared in (1) through the electrolyte injection side, the remaining electrolyte injection side was also sealed, and the cell was allowed to be impregnated for 12 hours or more to manufacture a lithium secondary battery sample.

## Example 2

A secondary battery sample was manufactured in the same manner as in Example 1, except that the compound of Chemical Formula 1-2 below was used as the fluorinated additive.

[Chemical Formula 1-2]

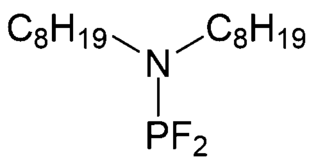

## Example 3

A secondary battery sample was manufactured in the same manner as in Example 1, except that a blend of Li $[Ni_{0.6}Co_{0.2}Mn_{0.2}]O_2$ and $Li[Ni_{0.6}Co_{0.2}Mn_{0.2}]O_2$ in a weight ratio of 6:4 was used as the cathode active material.

## Comparative Example 1

A secondary battery sample was manufactured in the same manner as in Example 1, except that the fluorinated additive was omitted during the preparation of the electrolyte.

## Comparative Example 2

A secondary battery sample was manufactured in the same manner as in Example 1, except that the compound of Chemical Formula 4 below was used as the additive instead of the compound of Chemical Formula 1-1.

[Chemical Formula 4]

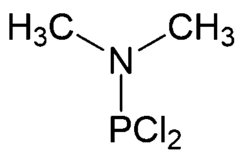

## Comparative Example 3

A secondary battery sample was manufactured in the same manner as in Example 1, except that the compound of Chemical Formula 5 below was used instead of the compound of Chemical Formula 1-1 as the additive.

[Chemical Formula 5]

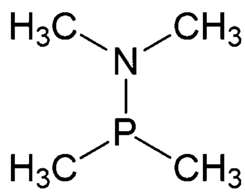

## Comparative Example 4

A secondary battery sample was manufactured in the same manner as in Comparative Example 2, except that a

blend of $Li[Ni_{0.6}Co_{0.2}Mn_{0.2}]O_2$ and $Li[Ni_{0.8}Co_{0.1}Mn_{0.1}]O_2$ in a weight ratio of 6:4 was used as the cathode active material.

## Experimental Example

### (1) Evaluation of Capacity Retention

The lithium secondary batteries manufactured according to the above-described examples and comparative examples were subjected to 50 cycles of charging (CC/CV 1C 4.6 V 0.05 C cut-off) and discharging (CC 1C 2.0 V cut-off) at 45°C.

The capacity retention was calculated according to Equation 1 below as a percentage by dividing the discharge capacity measured at the 100th cycle by the discharge capacity measured at the first cycle.

Capacity retention (%) = (Discharge capacity at the 100th cycle / Discharge capacity at the first cycle) × 100 [Equation 1]

### (2) Evaluation of Resistance Increase Ratio

The surface resistance of the cathode of each lithium secondary battery manufactured according to the above-described examples and comparative examples was measured to evaluate the resistance increase ratio.

Specifically, two lithium secondary batteries manufactured according to the above-described examples and comparative examples were prepared for each of the examples and comparative examples (hereinafter, the two lithium secondary batteries are each referred to as a first battery and a second battery). The first battery was placed in a 45°C chamber, and was charged at a C-rate of 1C within a voltage range of 2.0 V to 4.3 V and discharged at a C-rate of 1C. The charging and discharging were repeatedly performed 100 times.

After the charging and discharging were completed, the electrochemical impedance of the first battery was measured using a potentiostat (Biologic, VMP-3), and the surface resistance (Rct1) of the cathode was measured. The second battery was placed in a 45 °C chamber, and then charged at a C-rate of 1C within a voltage range of 2.0 V to 4.6 V and discharged at a C-rate of 1C. The charging and discharging were repeatedly performed 100 times.

After the charging and discharging were completed, the electrochemical impedance of the second battery was measured using the potentiostat, and the surface resistance (Rct2) of the cathode was determined. According to Equation 1 below, a ratio of the cathode surface resistance (Rct1) measured in the voltage-range cycle from 2.0 V to 4.3 V to the cathode surface resistance (Rct2) measured in the voltage-range cycle from 2.0 V to 4.6 V was calculated as a percentage and evaluated as the resistance increase ratio (%).

[Equation 2]

$$\text{Resistance increase ratio (\%)} = (Rct2 / Rct1) \times 100$$

The evaluation results are shown in Table 1 below.

[Table 1]

| Classification | Capacity retention (45 °C) (%, 100 cycles) | Resistance increase ratio (45 °C) (%) |
|---|---|---|
| Example 1 | 75 | 106 |
| Example 2 | 72 | 109 |
| Example 3 | 68 | 112 |
| Comparative Example 1 | 46 | 135 |
| Comparative Example 2 | 60 | 129 |
| Comparative Example 3 | 55 | 132 |
| Comparative Example 4 | 40 | 142 |

Referring to Table 1, the secondary batteries of the examples that included an electrolyte containing the fluorinated additive of Chemical Formula 1 exhibited improved capacity retention and resistance increase ratio compared to the secondary batteries of the comparative examples.

In addition, the secondary batteries of the examples exhibited improved capacity properties and internal

resistance even under lithium-rich cathode active materials and high-voltage charging conditions.

In the case of comparative examples, capacity retention under high-voltage conditions decreased, and resistance increased rapidly.

The secondary batteries of Examples 1 and 2 that included a lithium-rich cathode active material exhibited relatively high high-voltage charging stability. The secondary battery of Example 1, in which the fluorinated additive includes a relatively short-chain alkyl group, exhibited high capacity retention and low resistance increase ratio.

## Claims

1. An electrolyte for a lithium secondary battery comprising:

    a lithium salt;
    an organic solvent; and
    a fluorinated additive represented by Chemical Formula 1 below.

    [Chemical Formula 1]

    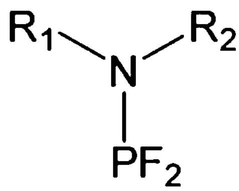

    wherein in Chemical Formula 1, $R_1$ and $R_2$ are each independently hydrogen, a hydroxyl group, an aliphatic hydrocarbon group having 1 to 10 carbon atoms, or an aromatic hydrocarbon group having 6 to 10 carbon atoms.

2. The electrolyte for a lithium secondary battery according to claim 1, wherein in Chemical Formula 1, $R_1$ and $R_2$ are each independently an alkyl group having 1 to 3 carbon atoms.

3. The electrolyte for a lithium secondary battery according to claim 1, wherein a content of the fluorinated additive is 0.1% by weight to 5.0% by weight based on the total weight of the electrolyte for a lithium secondary battery.

4. The electrolyte for a lithium secondary battery according to claim 1, further comprising at least one auxiliary additive selected from the group consisting of a cyclic carbonate compound, a fluorine-substituted cyclic carbonate compound, a sultone compound, and a cyclic sulfonate compound.

5. The electrolyte for a lithium secondary battery according to claim 4, wherein the content of the auxiliary additive is 0.01% by weight to 5.0% by weight based on the total weight of the electrolyte for a lithium secondary battery.

6. The electrolyte for a lithium secondary battery according to claim 1, wherein the organic solvent comprises a cyclic carbonate compound and a linear carbonate compound.

7. The electrolyte for a lithium secondary battery according to claim 1, wherein the organic solvent comprises at least one of ethylene carbonate (EC), ethyl methyl carbonate (EMC), dimethyl carbonate (DMC), and diethyl carbonate (DEC).

8. A lithium secondary battery comprising:

    an electrode assembly comprising a cathode including a lithium metal oxide having a molar ratio of lithium of 1.1 or more, and an anode disposed opposite the cathode; and
    an electrolyte that impregnates the electrode assembly and comprises a fluorinated additive represented by Chemical Formula 1 below:

[Chemical Formula 1]

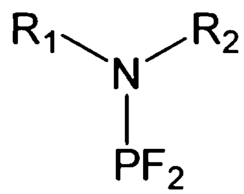

wherein in Chemical Formula 1, $R_1$ and $R_2$ are each independently hydrogen, an aliphatic hydrocarbon group having 1 to 10 carbon atoms, or an aromatic hydrocarbon group having 6 to 10 carbon atoms.

**9.** The lithium secondary battery according to claim 8, wherein the electrolyte further comprises a lithium salt and an organic solvent.

**10.** The lithium secondary battery according to claim 9, wherein the content of the fluorinated additive is 0.1% by weight to 5.0% by weight based on the total weight of the electrolyte.

**11.** The lithium secondary battery according to claim 8, wherein the molar ratio of lithium in the lithium metal oxide is greater than 1.1.

**12.** The lithium secondary battery according to claim 8, wherein the lithium metal oxide further comprises nickel and manganese.

**13.** The lithium secondary battery according to claim 12, wherein the molar ratio of manganese in the lithium metal oxide is greater than the molar ratio of nickel.

**14.** The lithium secondary battery according to claim 8, wherein the lithium metal oxide is represented by Chemical Formula 2:

[Chemical Formula 2] $Li_a[M_xNi_yMn_z]O_b$

wherein in Chemical Formula 2, M is at least one selected from the group consisting of Co, Mg, V, Ti, Al, Ru, Zr, W, Sn, Nb, Mo, Cu, Zn, Cr, Ga, V and Bi, and $0 \leq x \leq 0.9$, $0 \leq y \leq 0.9$, $0.1 \leq z \leq 0.9$, $x+y>0$, $1.8 \leq a+x+y+z \leq 2.2$, $1.05 \leq a/(x+y+z) \leq 1.95$, and $1.8 \leq b \leq 2.2$.

**15.** The lithium secondary battery according to claim 14, wherein in Chemical Formula 2, $y \leq z$.

FIG. 1

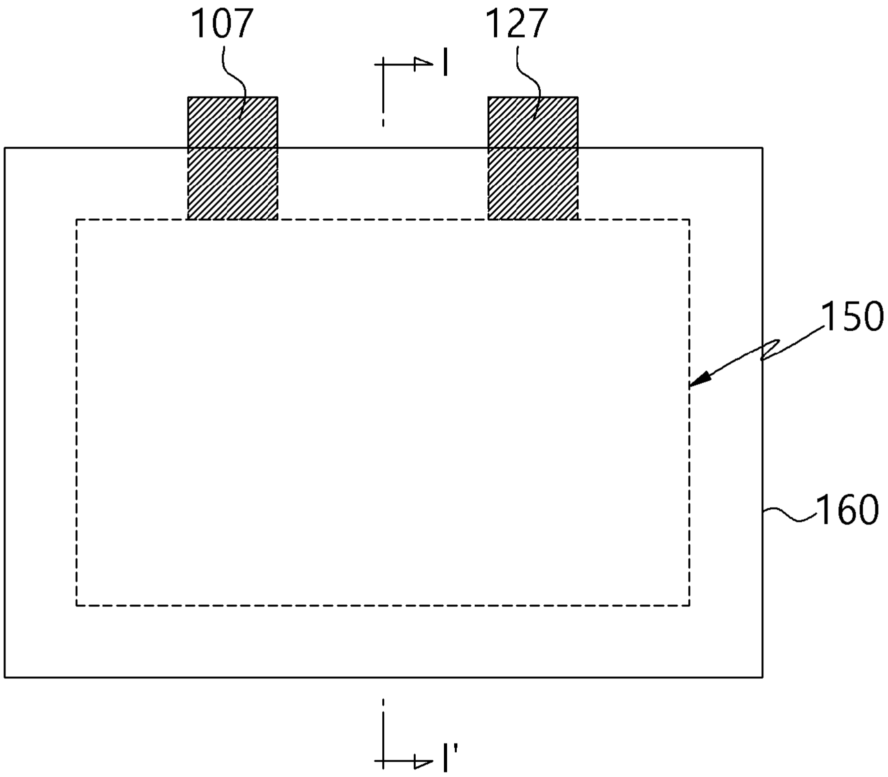


FIG. 2

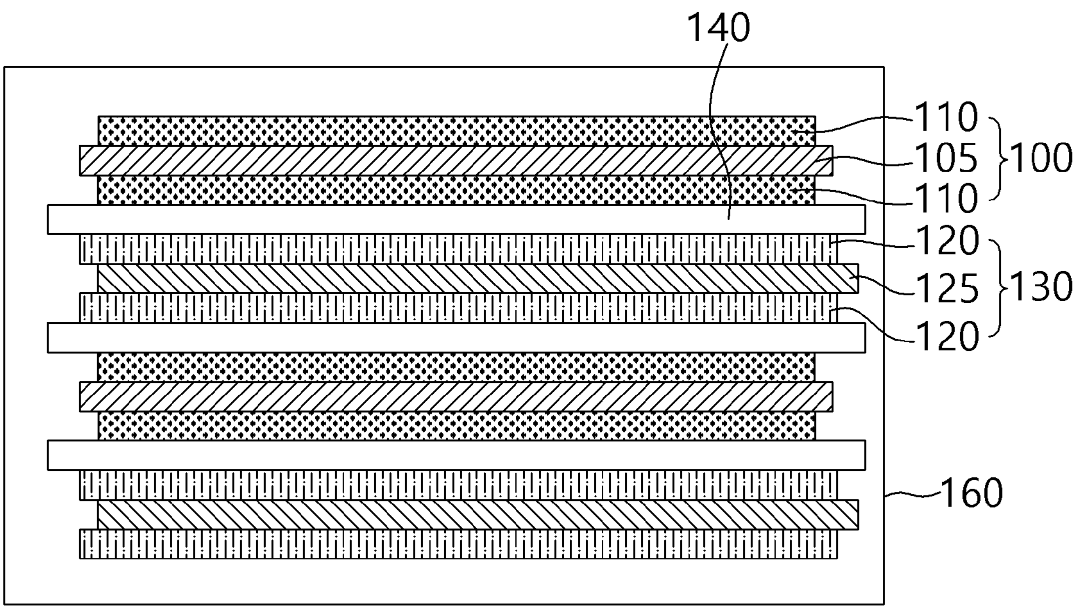

**INTERNATIONAL SEARCH REPORT**

International application No. **PCT/KR2024/009761**

**A. CLASSIFICATION OF SUBJECT MATTER**

**H01M 10/0567**(2010.01)i; **H01M 10/052**(2010.01)i; **H01M 4/505**(2010.01)i; **H01M 4/525**(2010.01)i; **H01M 4/02**(2006.01)i

According to International Patent Classification (IPC) or to both national classification and IPC

**B. FIELDS SEARCHED**

Minimum documentation searched (classification system followed by classification symbols)

H01M 10/0567(2010.01); H01M 10/052(2010.01); H01M 10/0525(2010.01); H01M 10/40(2006.01); H01M 10/42(2006.01); H01M 6/14(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus) & keywords: 리튬 이차전지(lithium secondary battery), 디플루오로포스핀기(difluorophosphine group), 아민기(amine group), 과리튬 망간계 산화물(lithium-rich manganese-based oxide)

**C. DOCUMENTS CONSIDERED TO BE RELEVANT**

| Category* | Citation of document, with indication, where appropriate, of the relevant passages | Relevant to claim No. |
|---|---|---|
| X<br>Y | KR 10-2022-0141615 A (SK ON CO., LTD.) 20 October 2022 (2022-10-20)<br>See claims 1-12; and paragraphs [0041], [0042], [0106]-[0110] and [0140]-[0154]. | 1-10<br>11-15 |
| Y | KR 10-2020-0089182 A (LG CHEM, LTD.) 24 July 2020 (2020-07-24)<br>See claims 1-13; and paragraphs [0026], [0051] and [0084]. | 11-15 |
| X | KR 10-2023-0080622 A (ENCHEM CO., LTD.) 07 June 2023 (2023-06-07)<br>See claims 1 and 5-9; and paragraphs [0059]-[0071], [0079] and [0092]. | 1-7 |
| A | US 2007-0202417 A1 (HORIKAWA, Y. et al.) 30 August 2007 (2007-08-30)<br>See claims 1-10; and table 1. | 1-15 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **25 October 2024** | **27 October 2024** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2022)

**INTERNATIONAL SEARCH REPORT**

International application No.
**PCT/KR2024/009761**

**C. DOCUMENTS CONSIDERED TO BE RELEVANT**

| Category* | Citation of document, with indication, where appropriate, of the relevant passages | Relevant to claim No. |
|---|---|---|
| A | CN 111430794 A (NINGDE AMPEREX TECHNOLOGY LTD.) 17 July 2020 (2020-07-17)<br>See claims 1-12. | 1-15 |

Form PCT/ISA/210 (second sheet) (July 2022)

**INTERNATIONAL SEARCH REPORT**
**Information on patent family members**

International application No.
**PCT/KR2024/009761**

| Patent document cited in search report | Publication date (day/month/year) | Patent family member(s) | Publication date (day/month/year) |
|---|---|---|---|
| KR 10-2022-0141615 A | 20 October 2022 | CN 115207464 A | 18 October 2022 |
| | | EP 4075560 A1 | 19 October 2022 |
| | | US 2022-0328876 A1 | 13 October 2022 |
| KR 10-2020-0089182 A | 24 July 2020 | None | |
| KR 10-2023-0080622 A | 07 June 2023 | None | |
| US 2007-0202417 A1 | 30 August 2007 | CN 100474687 C | 01 April 2009 |
| | | CN 1943070 A | 04 April 2007 |
| | | EP 1739784 A1 | 03 January 2007 |
| | | EP 1739784 B1 | 18 January 2012 |
| | | JP 4785735 B2 | 05 October 2011 |
| | | US 7947399 B2 | 24 May 2011 |
| | | WO 2005-104289 A1 | 03 November 2005 |
| CN 111430794 A | 17 July 2020 | CN 111430794 B | 29 June 2021 |
| | | EP 3876329 A1 | 08 September 2021 |

Form PCT/ISA/210 (patent family annex) (July 2022)